# FASCICULE DE BREVET EUROPEEN

(11) **EP 0 894 714 B1**
(45) Date de publication et mention de la délivrance du brevet: **23.10.2002**
(21) Numéro de dépôt: 98390010.1
(22) Date de dépôt: 15.07.1998
(51) Int. Cl.: B64D 13/00

(54) **Procédé et dispositif d'humidification de l'air dans une cabine d'aéronef**
Luftbefeuchtungsverfahren und Anlage für Flugzeugkabinen
Air humidifying method and device for aircraft cabins

(30) Priorité: 28.07.1997 FR 9709685
(43) Date de publication de la demande: 03.02.1999
(73) Titulaire: LIEBHERR-AEROSPACE TOULOUSE S.A., 31016 Toulouse Cédex (FR)
(72) Inventeur: Hartenstein, Laurent, 31880 La Salvetat Saint Gilles (FR); Eglem, Michel, 31200 Toulouse (FR)
(74) Mandataire: Cabinet BARRE LAFORGUE & associés

(56) Documents cités:
- EP-A- 0 453 385
- US-A- 3 761 019
- US-A- 4 272 014
- PATENT ABSTRACTS OF JAPAN vol. 004, no. 068 (M-012), 21 mai 1980 & JP 55 031618 A (NAGATA KOICHI), 6 mars 1980

## Description

L'invention concerne un procédé d'humidification de l'air dans une cabine d'aéronef, selon lequel on injecte de la vapeur d'eau dans un circuit de chauffage/conditionnement d'air de la cabine relié à un circuit primaire d'air chaud en provenance d'une turbomachine dudit aéronef. Elle s'étend à un système d'humidification de mise en oeuvre de ce procédé.

Le contrôle du niveau d'humidité relative à l'intérieur d'aéronefs durant les vols de longue durée à haute altitude est de nos jours quasi-obligatoire afin d'améliorer le confort des passagers et de l'équipage. En effet, si le taux d'humidité relative est trop bas, par exemple en dessous de 10 %, les passagers et l'équipage; durant les vols de longues durées, peuvent être sujets à des sensations de gêne, notamment d'assèchement des yeux, du nez et de la gorge. De plus, concernant les équipages, un tel taux d'humidité peut engendrer des problèmes de santé, tels que calculs urinaires, desquamation de la peau en présence d'agents spécifiques irritants...

En vue de pallier ces inconvénients, il est usuel à l'heure actuelle d'équiper les aéronefs d'humidificateurs conçus pour permettre de maintenir une humidité relative de l'ordre de 15 % à 30 % à l'intérieur de la cabine, et ainsi, améliorer le confort des passagers et de l'équipage.

Les dispositifs classiques d'humidification tels que notamment décrits dans le brevet US-4 272 014 consistent à injecter des gouttelettes d'eau dans un courant d'air chaud provenant d'une turbomachine de l'aéronef. L'inconvénient majeur de tels dispositifs réside dans le fait qu'ils ne permettent pas de garantir une totale évaporation de l'eau. De ce fait, ils peuvent conduire à des phénomènes de condensation d'eau sur les surfaces froides de l'aéronef qui entraînent des risques de corrosion de la structure dudit aéronef.

En outre, la solution qui permettrait de pallier cet inconvénient, consistant à utiliser un dispositif d'injection doté d'un nez de pulvérisation de faible section afin d'assurer une parfaite pulvérisation de l'eau, conduit à une obstruction rapide du nez de pulvérisation résultant de la formation de dépôts minéraux. De ce fait, le dispositif d'injection doit être nettoyé fréquemment, d'où des coûts de maintenance élevés.

De plus, avec de tels dispositifs d'injection, des particules minérales peuvent être entraînées dans le circuit de chauffage/conditionnement et générer des problèmes de corrosion. Pour cette raison, les dispositifs d'injection sont dotés d'un filtre qui présente toutefois l'inconvénient de devoir être nettoyé fréquemment et donc d'accroître les frais de maintenance.

Enfin, de tels dispositifs d'injection présentent l'inconvénient de pouvoir être la source de contamination par diffusion en cabine de contaminants bactériens ou viraux contenus dans l'eau.

La présente invention vise à pallier l'ensemble de ces inconvénients et a pour objectif essentiel de fournir un dispositif d'humidification ne nécessitant qu'une maintenance très restreinte, et offrant une sécurité maximale en terme de corrosion et de contamination.

Un autre objectif de l'invention est de fournir un dispositif d'humidification permettant de maîtriser la consommation d'eau nécessaire pour un vol.

Un autre objectif de l'invention est de fournir un dispositif d'humidification dont le fonctionnement ne nécessite qu'une très faible puissance électrique.

A cet effet, l'invention vise un procédé d'humidification de l'air dans une cabine d'aéronef selon lequel :
- on prélève un débit secondaire d'air chaud à partir du circuit primaire d'air chaud,
- on introduit ce débit secondaire d'air chaud dans un bouilleur renfermant un échangeur air/eau et rempli au moins partiellement d'eau, de façon à former dans ledit bouilleur un débit de vapeur d'eau fonction dudit débit secondaire d'air chaud,
- on mélange en sortie du bouilleur le débit de vapeur d'eau et le débit secondaire d'air chaud, de façon à obtenir un débit secondaire d'air chaud chargé en vapeur d'eau,
- et on injecte ce débit secondaire d'air chaud chargé en vapeur d'eau dans le circuit de chauffage/conditionnement d'air de la cabine.

Le procédé selon l'invention consiste donc à porter à ébullition un volume d'eau à l'intérieur d'un réservoir fermé sous pression, par transfert de chaleur entre de l'air chaud secondaire prélevé sur le circuit primaire d'air chaud et ce volume d'eau, et à produire de la vapeur d'eau surchauffée qui est entraînée par le flux d'air chaud.

De ce fait, et en premier lieu, seule la vapeur d'eau est entraînée par le débit d'air chaud et par conséquent le circuit de distribution est isolé du circuit d'alimentation d'eau. Il n'existe ainsi aucun risque que des particules minérales ou des corps solides soient véhiculés par ce débit d'air chaud et viennent polluer le circuit de distribution.

De plus, moyennant un dimensionnement adéquat du bouilleur, ce procédé conduit à obtenir un temps de transit important de l'eau à température d'ébullition dans ledit bouilleur, assurant une stérilisation de cette eau avant distribution de la vapeur en cabine, et une sécurité maximale en terme de contamination microbienne.

En outre, le mélange de la vapeur et de l'air chaud ayant servi à sa génération est réalisé dans le bouilleur même, de façon à assurer le transport d'un air humidifié à un niveau d'humidité relative très bas supprimant les risques de condensation de la vapeur dans le circuit de chauffage/conditionnement de l'aéronef.

Par ailleurs, le fait d'utiliser un échangeur compact air/eau pour la génération de vapeur conduit à obtenir un système dont le taux d'encrassement minéral est très faible, apte à fonctionner moyennant simplement un nettoyage périodique du bouilleur dans lequel i se déposent les minéraux.

Enfin, un tel concept conduit à l'obtention d'un système ne nécessitant qu'une très faible puissance électrique de fonctionnement.

Selon un mode de mise en oeuvre préférentiel :
- on calcule la température de rosée de l'air en cabine à partir d'un signal représentatif de la pression en cabine et de signaux représentatifs de la température et de l'humidité mesurées en cabine,
- on limite la quantité d'humidité introduite dans le circuit de chauffage/conditionnement, de façon que le point de rosée en cabine soit maintenu à une valeur consigne prédéterminée.

Le fait d'utiliser, comme paramètre de régulation, la température de rosée en cabine, permet de maîtriser, d'une part la consommation d'eau du système, de façon totalement indépendante des sélections de température en cabine, et d'autre part, les risques de condensation sur les parois froides de l'aéronef, et ce tout en restant dans des zones de confort couramment admises.

De plus, il est à noter que ce contrôle du point de rosée est réalisé à partir de mesures de l'humidité relative, de température et de pression en cabine, et ne nécessite donc pas la mise en place d'un capteur de température de rosée.

Selon un mode de mise en oeuvre préférentiel, ce contrôle du niveau d'humidité est réalisé en boucle fermée, et l'on maintient à cet effet une valeur constante du point de rosée en cabine en régulant le débit secondaire d'air chaud introduit dans le bouilleur.

Selon une autre caractéristique de l'invention, on remplit initialement le bouilleur d'un volume prédéterminé d'eau, et on commande des remplissages périodiques dudit bouilleur lorsque le volume d'eau à l'intérieur de ce dernier atteint un niveau minimal prédéterminé.

On obtient ainsi une indépendance totale de la gestion du flux d'eau et du contrôle d'humidité, assurant une maîtrise fine du flux de vapeur et une sécurité maximale du système (pas de débordement, pas de risque de sous-production de vapeur...).

Par ailleurs, lors de la phase de descente de l'aéronef, on commande préférentiellement une vidange du bouilleur lorsque ledit aéronef se trouve en dessous d'une altitude prédéterminée.

L'invention s'étend à un dispositif d'humidification comprenant :
- un bouilleur constitué d'un réservoir principal fermé renfermant un échangeur air/eau et doté, en partie inférieure, d'une entrée d'eau et d'une entrée d'air chaud, et en partie supérieure, d'un collecteur de sortie,
- une conduite secondaire d'alimentation en air chaud du bouilleur reliée à un circuit primaire d'air chaud en provenance d'une turbomachine de l'aéronef, et dotée d'une vanne de régulation du débit d'air chaud délivré vers ledit bouilleur,
- une conduite d'alimentation en eau du bouilleur dotée d'au moins une vanne d'alimentation,
- une conduite reliant le collecteur de sortie du bouilleur et le circuit de chauffage/conditionnement de l'aéronef,
- et une unité de contrôle programmée pour piloter chaque vanne d'alimentation en vue d'assurer le remplissage en eau du bouilleur, et pour moduler la position de la vanne de régulation en vue de réguler le débit d'air chaud délivré dans ledit bouilleur.

Ce dispositif comporte, de plus, préférentiellement un capteur de température et d'humidité relative destiné à être disposé dans la cabine et adapté pour délivrer des signaux représentatifs de la température et de l'humidité relative dans ladite cabine.

Avantageusement l'unité de contrôle est, en outre, programmée pour calculer, à partir des signaux délivrés par le capteur de température et d'humidité relative, et d'un signal représentatif de la pression en cabine, le point de rosée dans ladite cabine, et pour réguler la vanne de régulation du débit secondaire d'air chaud, de façon à obtenir, en cabine, un point de rosée de valeur prédéterminée.

Selon une autre caractéristique préférée de l'invention, ce dispositif d'humidification comprend un capteur de niveau disposé à l'intérieur du bouilleur et adapté pour délivrer des signaux représentatifs du volume d'eau contenue dans ledit bouilleur, l'unité de contrôle étant programmée pour commander l'ouverture de chaque vanne d'alimentation lors de la réception d'un signal représentatif d'un volume d'eau minimal prédéterminé à l'intérieur du bouilleur, et pour commander la fermeture de chaque vanne d'alimentation lors de la réception d'un signal représentatif d'un volume d'eau maximal prédéterminé à l'intérieur dudit bouilleur.

De plus, ce dispositif d'humidification comporte avantageusement deux vannes, dites d'alimentation et d'isolation, disposées sur la conduite d'alimentation en eau, l'unité de contrôle étant adaptée pour commander en cascade l'ouverture et la fermeture desdites vannes en vue des remplissages en eau du bouilleur.

Le capteur de niveau est, quant à lui, préférentiellement un capteur capacitif consistant en une sonde tubulaire adaptée pour s'étendre dans un compartiment latéral du bouilleur en communication avec le réservoir principal dudit bouilleur.

Le dispositif d'humidification comporte par ailleurs avantageusement :
- une vanne de purge du bouilleur, l'unité de contrôle étant programmée pour commander l'ouverture de ladite vanne lorsque l'aéronef descend en dessous d'une altitude prédéterminée,
- un capteur de température disposé en sortie du bouilleur et destiné à la détection de températures de surchauffe.

Selon une autre caractéristique préférée de l'invention, l'échangeur air/eau du bouilleur est un 5 échangeur à plaques délimitant des conduits de passage d'air chaud dotés d'ailettes internes reliant ledites plaques.

D'autres caractéristiques, buts et avantages de l'invention ressortiront de la description 0 détaillée qui suit en référence aux dessins annexés qui en représentent à titre d'exemple non limitatif un mode de réalisation préférentiel. Sur ces dessins qui font partie intégrante de la présente description :

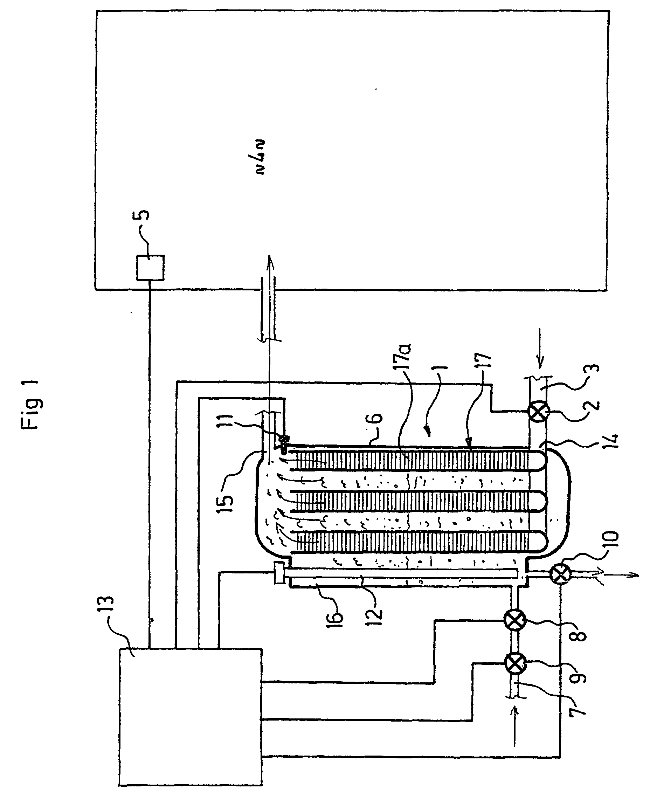

- la figure 1 est un schéma synoptique d'un 5 système d'humidification conforme à l'invention,

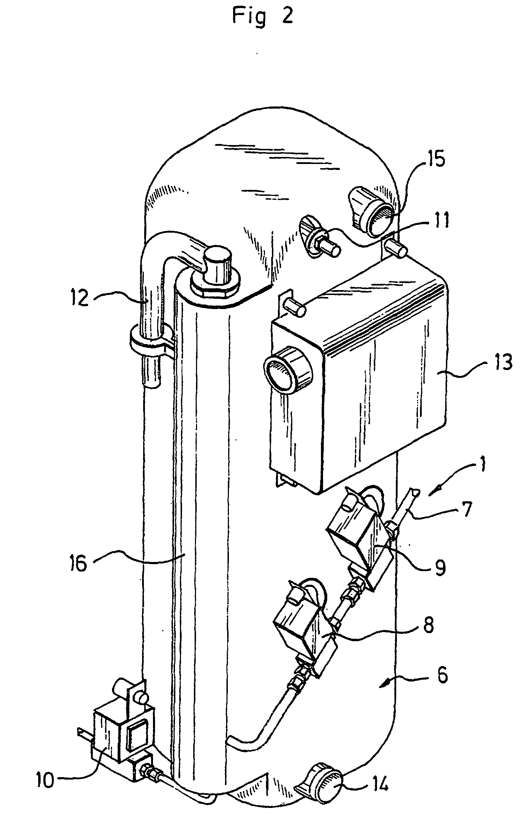

- la figure 2 est une vue en perspective du bouilleur de ce système d'humidification,

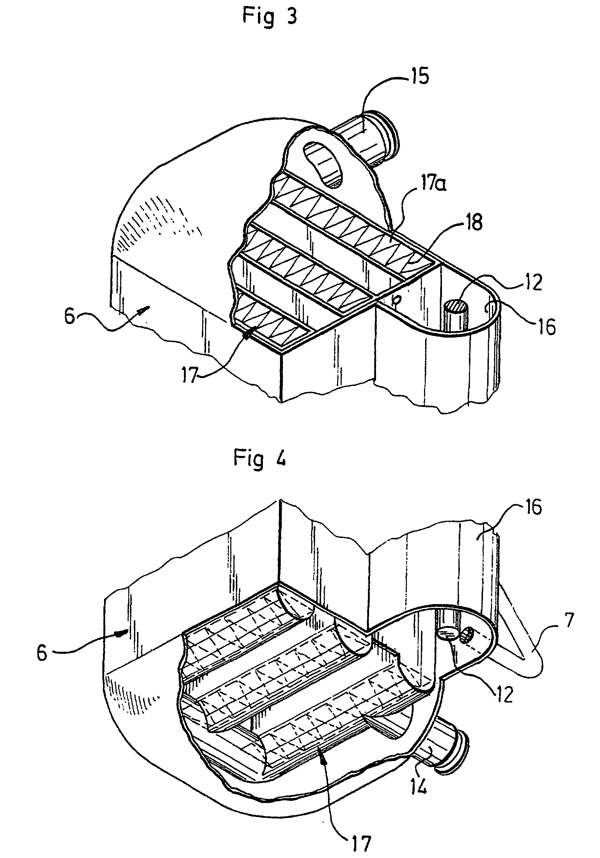

- la figure 3 est une vue en perspective partiellement en arraché de la partie supérieure de ce 0 bouilleur,
- et la figure 4 est une vue en perspective partiellement en arraché de la partie inférieure de ce bouilleur.

Le système d'humidification selon 5 l'invention se compose de trois sous-ensembles :
- un humidificateur 1, coeur du système, constituant une unité compacte intégrant les éléments clés dudit système décrits ci-après, et assurant notamment la gestion et la surveillance de ce dernier, et la production de vapeur,
- une vanne 2 de régulation du débit d'air chaud disposée sur une conduite secondaire 3 d'air chaud reliant l'humidificateur 1 au circuit principal d'air chaud de conditionnement de la cabine 4, et destinée à réguler le débit d'air délivré vers l'humidificateur de façon à ajuster l'humidité dans ladite cabine.

Cette vanne 2 est une vanne papillon pilotée par un servomoteur électrique doté de deux micro-interrupteurs permettant de détecter les états totalement fermé et ouvert de ladite vanne. En cours de fonctionnement normal, la position du papillon est ajustée par des impulsions de tension délivrées vers le servomoteur par une unité de contrôle décrite plus loin. De plus, en période de non fonctionnement, cette vanne 2 est maintenue fermée,
- et un capteur ventilé 5 d'humidité et de température disposé dans la cabine 4, adapté pour assurer des mesures de température et d'humidité permettant de contrôler l'humidité dans ladite cabine.

Ce capteur 5 est composé d'un capteur d'humidité relative et d'un capteur de température, et incorpore un ventilateur assurant une circulation d'air efficace autour des éléments de détection. Le capteur d'humidité est conçu pour délivrer un signal de fréquence variable fonction de l'humidité relative relevée. Le capteur de température est quant à lui conçu pour délivrer un signal de tension continue proportionnel à la température mesurée en cabine 4.

L'humidificateur est, quant à lui, composé des éléments suivants :
- un bouilleur 6 adapté pour conduire à une évaporation de l'eau provenant du circuit d'eau potable 7 de l'aéronef,
- une vanne d'isolation 8 disposée sur le circuit d'alimentation d'eau 7 du bouilleur 6,
- une vanne d'alimentation 9 destinée à permettre les remplissages périodiques du bouilleur 6,
- une vanne de purge 10 assurant la vidange du bouilleur 6,
- un capteur de température 11 disposé de façon à mesurer la température de l'air en sortie du bouilleur 6, et destiné à la détection de températures de surchauffe,
- un capteur de niveau 12 assurant la détection du niveau d'eau à l'intérieur du bouilleur 6,
- une unité de contrôle 13 assurant le pilotage des vannes 2, 8, 9, 10 de l'humidificateur 1, le traitement des signaux des divers capteurs 5, 11, 12, la détection de défauts de fonctionnement, et constituant une interface avec des systèmes externes.

En premier lieu, le bouilleur 6 assure le transfert de chaleur entre l'air chaud dont le débit est régulé par la vanne de régulation 2, et l'eau renfermée dans ledit bouilleur, et génère la vapeur requise pour obtenir une humidité relative adéquate dans la cabine.

Ce bouilleur 6 qui forme un réservoir fermé comporte :
- un collecteur inférieur 14 d'entrée d'air chaud,
- un collecteur supérieur 15 de sortie de l'air chaud chargé en vapeur,
- un compartiment latéral 16 en communication avec le réservoir principal et destiné à loger le capteur de niveau 12,
- un échangeur de chaleur 17 constitué de plusieurs conduits verticaux séparés et parallèles tels que 17a communiquant au niveau de leur base avec le collecteur 14 d'entrée d'air chaud, et réalisés en acier inoxydable 316 L en raison des excellentes propriétés anticorrosion de ce matériau. En outre, chacun de ces conduits intègre des ailettes internes telles que 18 en forme de chevrons.

En mode opératoire, le bouilleur 6 est rempli d'eau jusqu'à un niveau maximal adapté pour éviter tout écoulement d'eau à l'intérieur de l'échangeur de chaleur 17. L'air chaud circulant dans l'échangeur de chaleur 17 assure la mise en ébullition et l'évaporation de cette eau, et la vapeur générée est ensuite mélangée avec cet air chaud dans le collecteur de sortie 15.

Les vannes d'isolation 8 et d'alimentation 9 sont quant à elles destinées à permettre de contrôler le niveau d'eau à l'intérieur du bouilleur 6 par alimentation périodique de ce dernier en eau potable. Le fait de prévoir deux vannes 8 et 9 a pour but d'augmenter la sûreté de fonctionnement en prévoyant deux obturateurs sur le circuit d'alimentation d'eau.

Ces deux vannes 8, 9 sont identiques. Elles présentent un état naturel fermé sous l'effet d'un ressort, et sont associées à un électro-aimant permettant leur ouverture par commande électrique.

Ces vannes 8, 9 sont commandées de façon à présenter :
- un état fermé lorsque l'humidificateur 1 ne fonctionne pas, lorsque le bouilleur est détecté "vide", et lors des opérations de vidange du bouilleur 6,
- un état ouvert lors des opérations de vidange du circuit d'alimentation d'eau 7 et du bouilleur 6.

De plus, la vanne d'alimentation 9 est commandée pour présenter un état ouvert lors de la détection d'un niveau de remplissage minimal du bouilleur 6, la vanne d'isolation 8 étant alors elle-même ouverte ensuite en cascade.

La vanne de purge 10 est du même type que les vannes précitées mais adaptée pour autoriser un débit supérieur. Elle est commandée électriquement de façon à être ouverte uniquement lors des opérations de purge.

Le capteur de température 11 est du type à plongeur et est adapté pour délivrer un signal électrique fonction de la température du mélange air/vapeur.

Le capteur de niveau 12 est un capteur capacitif et consiste en une sonde annulaire adaptée pour s'étendre à l'intérieur du compartiment latéral 16 du bouilleur 6, associée à un module électronique apte à convertir le signal délivré par ladite sonde en un signal de fréquence variable fonction du niveau d'eau relevé. Quatre seuils de niveaux sont utilisés à des fins de contrôle : niveau maximal (débordement), niveau haut, niveau bas, niveau "vide".

L'unité de contrôle 13 comprend une unité centrale bâtie autour d'un microcontrôleur et comportant diverses interfaces destinées à lui permettre :
- de recevoir et traiter des signaux électriques provenant :
   . du capteur d'humidité et de température 5,
   . du capteur de niveau d'eau 12 du bouilleur 6,
   . du capteur de température 11 disposé en sortie du bouilleur 6,
   . de sources externes, telles que notamment les moyens de mesure de la pression en cabine.
- de délivrer des signaux de pilotage de :
   . la vanne 2 de régulation du débit d'air chaud,
   . la vanne d'isolation 8,
   . la vanne d'alimentation 9,
   . la vanne de purge 10.
- de transmettre des informations à des sources externes.

Ce système d'humidification est mis en action lorsque l'aéronef atteint une altitude prédéterminée de l'ordre de 8000 à 9000 m, et lorsque sa mise en route est déclenchée par le pilote.

Quant ce système d'humidification est opérationnel, l'humidité relative en cabine 4 est contrôlée de façon que le point de rosée en cabine demeure constant. La configuration sélectionnée correspond à un point de rosée de 0°C qui équivaut à une humidité relative de 20 % pour une température en cabine de 24°C.

Le fait de contrôler la température de point de rosée présente plusieurs avantages :
- la consommation d'eau est indépendante de la température en cabine, et peut donc être maîtrisée,
- les risques de condensation sur les zones froides de l'aéronef (hublots...) sont minimaux, et les variations de température en cabine ne conduisent pas à la formation de rosée sur les zones froides,
- le confort est optimal du fait que l'humidité est définie en terme d'humidité relative (équivalent à la température de point de rosée constante).

Le fonctionnement de ce système d'humidification est le suivant :

En premier lieu, lorsque ce système est activé, l'ouverture des vannes d'alimentation 9 et d'isolation 8 est commandée par l'unité de contrôle 13, et ce jusqu'à ce que le niveau haut de remplissage du bouilleur 6 soit détecté par le capteur de niveau 12.

Durant la totalité de la période de fonctionnement, la position d'ouverture de la vanne 2 de régulation du débit d'air chaud est régulée par l'unité de contrôle 13 de façon à maintenir en cabine un point de rosée constant.

Par ailleurs, lorsque le niveau bas est détecté par le capteur de niveau 12, l'unité de contrôle 13 commande l'ouverture des vannes d'alimentation 9 et d'isolation 8 jusqu'à ce que le niveau haut soit détecté par ledit capteur. Cette opération assure des remplissages périodiques du bouilleur 6.

Enfin, si l'aéronef descend en dessous de l'altitude présélectionnée pour la mise en route du système (8 000 à 9 000 m), ou si l'humidité relative en cabine excède 30 % pour une température de 24°C, ou si le pilote commande l'arrêt du système, les vannes d'alimentation 9, d'isolation 8, et de régulation 2 sont fermées. Ces vannes sont, en outre, également fermées en cas de pannes.

En dernier lieu, les opérations de vidange sont commandées :
- pour le bouilleur 6, lorsque l'aéronef descend en dessous d'une altitude prédéterminée, par exemple 6000 m, la vidange est automatiquement initiée. A cet effet, les vannes d'alimentation 9 et d'isolation 8 sont fermées et l'unité de contrôle 13 commande l'ouverture de la vanne de purge 10 jusqu'à détection du niveau "vide" par le capteur de niveau 12,
- pour le circuit d'eau potable 7, lors de la réception par l'unité de contrôle 13 d'un signal de commande de vidange délivré par le système d'alimentation en eau potable, ou d'un signal de commande manuel.

Pour éviter tout risque de débordement l'unité de contrôle 13 commande alors l'ouverture de la vanne de purge 10 et vérifie que le bouilleur 6 est vide avant d'entamer la vidange du circuit d'alimentation 7. Une fois le signal "niveau vide" reçu elle commande l'ouverture des vannes 8, 9 tant que le signal de commande de vidange reste actif.

## Revendications

1. Procédé d'humidification de l'air dans une cabine (4) d'aéronef, selon lequel on injecte de la vapeur d'eau dans un circuit de chauffage/conditionnement d'air de la cabine (4) relié à un circuit primaire d'air chaud en provenance d'une turbomachine de l'aéronef, ledit procédé étant **caractérisé en ce que** :
- on prélève un débit secondaire d'air chaud à partir du circuit primaire d'air chaud,
- on introduit ce débit secondaire d'air chaud dans un bouilleur (6) renfermant un échangeur air/eau (17) et rempli au moins partiellement d'eau, de façon à former dans ledit bouilleur un débit de vapeur d'eau fonction dudit débit secondaire d'air chaud,
- on mélange en sortie du bouilleur (6) le débit de vapeur d'eau et le débit secondaire d'air chaud, de façon à obtenir un débit secondaire d'air chaud chargé en vapeur d'eau,
- et on injecte ce débit secondaire d'air chaud chargé en vapeur d'eau dans le circuit de chauffage/conditionnement d'air de la cabine (4).

2. Procédé d'humidification selon la revendication 1, **caractérisé en ce que** :
- on calcule la température de rosée de l'air en cabine (4) à partir d'un signal représentatif de la pression en cabine et de signaux représentatifs de la température et de l'humidité mesurées en cabine,
- on limite la quantité d'humidité introduite dans le circuit de chauffage/conditionnement, de façon que le point de rosée en cabine soit maintenu à une valeur consigne prédéterminée.

3. Procédé d'humidification selon la revendication 2, **caractérisé en ce que** l'on sélectionne comme valeur de consigne un point de rosée correspondant à 0° C équivalant à une humidité relative de 20 % pour une température en cabine de 24° C.

4. Procédé d'humidification selon l'une des revendications 2 ou 3, **caractérisé en ce que** l'on maintient une valeur constante du point de rosée en cabine (4) en régulant le débit secondaire d'air chaud introduit dans le bouilleur (6).

5. Procédé d'humidification selon l'une des revendications précédentes, **caractérisé en ce que** l'on remplit initialement le bouilleur (6) d'un volume prédéterminé d'eau, et **en ce que** l'on commande des remplissages périodiques dudit bouilleur lorsque le volume d'eau à l'intérieur de ce dernier atteint un niveau minimal prédéterminé.

6. Procédé d'humidification selon l'une des revendications précédentes, **caractérisé en ce que** l'on commande une vidange du bouilleur (6) lorsque l'aéronef descend en dessous d'une altitude prédéterminée.

7. Procédé d'humidification selon l'une des revendications précédentes, **caractérisé en ce que** l'on alimente le bouilleur à partir du circuit d'eau potable (7) de l'aéronef.

8. Dispositif d'humidification pour la mise en oeuvre du procédé conforme à l'une des revendications 1 à 7, **caractérisé en ce qu'**il comprend :
- un bouilleur (6) constitué d'un réservoir principal fermé renfermant un échangeur air/eau (17) et doté, en partie inférieure, d'une entrée d'eau et d'une entrée d'air chaud (14), et en partie supérieure, d'un collecteur de sortie (15),
- une conduite secondaire (3) d'alimentation en air chaud du bouilleur (6) reliée à un circuit primaire d'air chaud en provenance d'une turbomachine de l'aéronef, et dotée d'une vanne (2) de régulation du débit d'air chaud délivré vers ledit bouilleur,
- une conduite (7) d'alimentation en eau du bouilleur (6) dotée d'au moins une vanne d'alimentation (8, 9),
- une conduite reliant le collecteur de sortie (15) du bouilleur (6) et le circuit de chauffage/conditionnement de l'aéronef,
- et une unité de contrôle (13) programmée pour piloter chaque vanne d'alimentation (8, 9) en vue d'assurer le remplissage en eau du bouilleur (6), et pour moduler la position de la vanne de régulation (2) en vue de réguler le débit d'air chaud délivré dans ledit bouilleur.

9. Dispositif d'humidification selon la revendication 8, **caractérisé en ce que** :
- il comporte un capteur de température et d'humidité relative (5) destiné à être disposé dans la cabine (4) et adapté pour délivrer des signaux représentatifs de la température et de l'humidité relative dans ladite cabine,
- l'unité de contrôle (13) est programmée pour calculer, à partir des signaux délivrés par le capteur de température et d'humidité relative (5), et d'un signal représentatif de la pression en cabine, le point de rosée dans ladite cabine, et pour réguler la vanne (2) de régulation du débit secondaire d'air chaud, de façon à obtenir, en cabine, un point de rosée de valeur prédéterminée.

10. Dispositif d'humidification selon l'une des revendications 8 ou 9, **caractérisé en ce qu'**il comprend un capteur de niveau (12) disposé à l'intérieur du bouilleur (6) et adapté pour délivrer des signaux représentatifs du volume d'eau contenue dans ledit bouilleur, l'unité de contrôle (13) étant programmée pour commander l'ouverture de chaque vanne d'alimentation (8, 9) lors de la réception d'un signal représentatif d'un volume d'eau minimal prédéterminé à l'intérieur du bouilleur (6), et pour commander la fermeture de chaque vanne d'alimentation (8, 9) lors de la réception d'un signal représentatif d'un volume d'eau maximal prédéterminé à l'intérieur dudit bouilleur.

11. Dispositif d'humidification selon la revendication 10, **caractérisé en ce qu'**il comprend deux vannes, dites d'alimentation (9) et d'isolation (8), disposées sur la conduite d'alimentation en eau (7), l'unité de contrôle (13) étant adaptée pour commander en cascade l'ouverture et la fermeture desdites vannes en vue des remplissages en eau du bouilleur (6).

12. Dispositif d'humidification selon l'une des revendications 10 ou 11, **caractérisé en ce que** le capteur de niveau est un capteur capacitif (12) consistant en une sonde tubulaire adaptée pour s'étendre dans un compartiment latéral (16) du bouilleur (6) en communication avec le réservoir principal dudit bouilleur.

13. Dispositif d'humidification selon l'une des revendications 8 à 12, **caractérisé en ce qu'**il comporte une vanne (10) de purge du bouilleur (6), l'unité de contrôle (13) étant programmée pour commander l'ouverture de ladite vanne lorsque l'aéronef descend en dessous d'une altitude prédéterminée.

14. Dispositif d'humidification selon l'une des revendications 8 à 13, **caractérisé en ce qu'**il comprend un capteur de température (11) disposé en sortie du bouilleur (6) et destiné à la détection de températures de surchauffe.

15. Dispositif d'humidification selon l'une des revendications 8 à 14, **caractérisé en ce que** l'échangeur air/eau du bouilleur (6) est un échangeur à plaques (17) délimitant des conduits (17a) de passage d'air chaud dotés d'ailettes internes (18) reliant lesdites plaques.

## Patentansprüche

1. Verfahren zum Befeuchten der Luft in der Kabine (4) eines Luftfahrzeugs, bei dem Wasserdampf in einen Heizungs/Klimaanlagenkreislauf der Kabine (4) eingespritzt wird, der mit einem primären Heißluftkreislauf von einer Turbomaschine des Luftfahrzeugs verbunden ist, wobei das genannte Verfahren **dadurch gekennzeichnet ist, dass**:
- eine sekundäre Heißluftmenge aus dem primären Heißluftkreislauf genommen wird,
- diese sekundäre Heißluftmenge in einen Kessel (6) eingeleitet wird, der einen Luft-/Wasseraustäuscher (17) umgibt und wenigstens teilweise mit Wasser gefüllt ist, so dass in dem genannten Kessel eine Wasserdampfmenge in Abhängigkeit von der genannten sekundären Heißluftmenge gebildet wird,
- am Ausgang des Kessels (6) die Wasserdampfmenge und die sekundäre Heißluftmenge so gemischt werden, dass eine Menge von mit Wasserdampf geladener sekundärer Heißluft entsteht,
- und diese Menge von mit Wasserdampf geladener sekundärer Heißluft in den Heizungs-/Klimaanlagenkreislauf der Kabine (4) eingespritzt wird.

2. Befeuchtungsverfahren nach Anspruch 1, **dadurch gekennzeichnet, dass**:
- die Tautemperatur der Luft in der Kabine (4) anhand eines für den Kabinendruck repräsentativen Signals sowie anhand von für die in der Kabine gemessenen Werte von Temperatur und Luftfeuchtigkeit repräsentativen Signalen errechnet wird,
- die in den Heizungs-/Klimaanlagenkreislauf eingeleitete Feuchtigkeitsmenge auf eine solche Weise begrenzt wird, dass der Taupunkt in der Kabine auf einem vorbestimmten Sollwert gehalten wird.

3. Befeuchtungsverfahren nach Anspruch 2, **dadurch gekennzeichnet, dass** als Sollwert ein Taupunkt gewählt wird, der bei 0°C einer relativen Luftfeuchtigkeit von 20 % für eine Kabinentemperatur von 24°C entspricht.

4. Befeuchtungsverfahren nach Anspruch 2 oder 3, **dadurch gekennzeichnet, dass** ein konstanter Taupunktwert in der Kabine (4) gehalten wird, indem die Menge an in den Kessel (6) eingeleiteter sekundärer Heißluft reguliert wird.

5. Befeuchtungsverfahren nach einem der vorherigen Ansprüche, **dadurch gekennzeichnet, dass** der Kessel (6) zunächst mit einem vorbestimmten Wasservolumen gefüllt wird, und dadurch, dass periodische Nachfüllungen des genannten Kessels dann bewirkt werden, wenn das Wasservolumen im Inneren des Letzteren einen vorbestimmten Mindeststand erreicht.

6. Befeuchtungsverfahren nach einem der vorherigen Ansprüche, **dadurch gekennzeichnet, dass** ein Entleeren des Kessels (6) dann angewiesen wird, wenn das Luftfahrzeug unter eine vorbestimmte Höhe absinkt.

7. Befeuchtungsverfahren nach einem der vorherigen Ansprüche, **dadurch gekennzeichnet, dass** der Kessel aus dem Trinkwasserkreislauf (7) des Luftfahrzeugs gespeist wird.

8. Befeuchtungsvorrichtung zum Ausführen des Verfahrens nach einem der Ansprüche 1 bis 7, **dadurch gekennzeichnet, dass** sie Folgendes umfasst:
- einen Kessel (6), der aus einem geschlossenen Hauptbehälter besteht, der einen Luft-/Wasseraustauscher (17) umschließt und im unteren Teil mit einem Wassereinlass und einem Heißlufteinlass (14) und im oberen Teil mit einem Sammelauslass (15) ausgestattet ist,
- einen sekundären Speisekanal (3) für Heißluft aus dem Kessel (6), der mit einem primären Heißluftkreislauf von einer Turbomaschine des Luftfahrzeugs verbunden und mit einem Ventil (2) zum Regulieren der Menge an zu dem genannten Kessel geführter Heißluft versehen ist,
- einen Kanal (7) zum Speisen von Wasser aus dem Kessel (6), der mit wenigstens einem Versorgungsventil (8, 9) versehen ist,
- einen Kanal, der den Sammelauslass (15) des Kessels (6) mit dem Heizungs-/Klimaanlagenkreislauf des Luftfahrzeugs verbindet,
- und eine Steuereinheit (13), die so programmiert ist, dass jedes Versorgungsventil (8, 9) so gesteuert wird, dass ein Füllen des Kessels (6) mit Wasser gewährleistet wird, und um die Position des Regulierventils (2) zum Regulieren der Menge an zu dem genannten Kessel geführter Heißluft zu verändern.

9. Befeuchtungsvorrichtung nach Anspruch 8, **dadurch gekennzeichnet, dass**:
- sie einen Fühler für Temperatur und relative Feuchte (5) aufweist, der in der Kabine (4) angeordnet werden kann und so gestaltet ist, dass er für die Temperatur und die relative Luftfeuchtigkeit in der Kabine repräsentative Signale erzeugt,
- die Steuereinheit (13) so programmiert ist, dass sie anhand der vom Fühler für Temperatur und relative Luftfeuchtigkeit (5) erzeugten Signale sowie anhand eines für den Druck in der Kabine repräsentativen Signals den Taupunkt in der genannten Kabine errechnet und das Ventil (2) zum Regulieren der genannten Menge an sekundärer Heißluft so steuert, dass in der Kabine ein Taupunkt mit einem vorbestimmten Wert erzielt wird.

10. Befeuchtungsvorrichtung nach Anspruch 8 oder 9, **dadurch gekennzeichnet, dass** sie einen Wasserstandsfühler (12) umfasst, der im Inneren des Kessels (6) angeordnet und so gestaltet ist, dass er für das in dem genannten Kessel enthaltene Wasservolumen repräsentative Signale erzeugt, wobei die Steuereinheit (13) so programmiert ist, dass sie das Öffnen jedes Versorgungsventils (8, 9) beim Empfang eines für ein minimales vorbestimmtes Wasservolumen im Inneren des Kessels (6) repräsentativen Signals und das Schließen jedes Versorgungsventils (8, 9) beim Empfang eines für ein maximales vorbestimmtes Wasservolumen im Inneren des genannten Kessels repräsentativen Signals anweist.

11. Befeuchtungsvorrichtung nach Anspruch 10, **dadurch gekennzeichnet, dass** sie zwei Ventile umfasst, ein Versorgungsventil (9) und ein Trennventil (8), die im Wasserversorgungskanal (7) angeordnet sind, wobei die Steuereinheit (13) so gestaltet ist, dass sie das kaskadenartige Öffnen und Schließen der genannten Ventile zum Füllen von Wasser in den Kessel (6) anweist.

12. Befeuchtungsvorrichtung nach Anspruch 10 oder 11,
**dadurch gekennzeichnet, dass** der Wasserstandsfühler ein kapazitiver Fühler (12) ist, der aus einer röhrenförmigen Sonde besteht, die so gestaltet ist, dass sie in einer lateralen Kammer (16) des Kessels (6) in Kommunikation mit dem Hauptbehälter des genannten Kessels verläuft.

13. Befeuchtungsvorrichtung nach einem der Ansprüche 8 bis 12, **dadurch gekennzeichnet, dass** sie ein Ventil (10) zum Spülen des Kessels (6) aufweist, wobei die Steuereinheit (13) so programmiert ist, dass sie das Öffnen des genannten Ventils anweist, wenn das Luftfahrzeug unter eine vorbestimmte Höhe absinkt.

14. Befeuchtungsvorrichtung nach einem der Ansprüche 8 bis 13, **dadurch gekennzeichnet, dass** sie einen Temperaturfühler (11) umfasst, der am Ausgang des Kessels (6) angeordnet ist und die Aufgabe hat, eine Überhitzungstemperatur zu erfassen.

15. Befeuchtungsvorrichtung nach einem der Ansprüche 8 bis 14, **dadurch gekennzeichnet, dass** der Luft/Wasseraustauscher des Kessels (6) ein Plattenaustauscher (17) ist, der Kanäle (17a) für die Passage von Heißluft begrenzt, die mit Innenflügeln (18) versehen sind, die die genannten Platten verbinden.

## Claims

1. Method for humidifying the air in an aircraft cabin (4), according to which steam is injected into a heating/air conditioning circuit of the cabin (4) connected to a primary hot air circuit coming from a turbo-engine of the aircraft, the said method being **characterized in that**:
- a secondary flow of hot air is drawn off from the primary hot air circuit,
- this secondary hot air flow is introduced into a boiler (6) enclosing an air/water exchanger (17) and filled at least partially with water, so as to form in the said boiler a flow of steam as a function of the said secondary hot air flow,
- the flow of steam and the secondary hot air flow are mixed on leaving the boiler (6) so as to obtain a secondary hot air flow loaded with steam,
- and this secondary hot air flow loaded with steam is injected into the heating/air conditioning circuit of the cabin (4).

2. Humidification method according to claim 1, **characterized in that** :
- the dew point temperature of the air in the cabin (4) is calculated from a signal representing the pressure in the cabin and from signals representing the temperature and humidity measured in the cabin,
- the quantity of humidity introduced into the heating/conditioning circuit is limited so that the dew point in the cabin is maintained at a predetermined set value.

3. Humidification method according to claim 2, **characterized in that** a dew point is selected as the set value, corresponding to 0°C which is equivalent to a relative humidity of 20 % for a temperature in the cabin of 24°C.

4. Humidification method according to either of claims 2 or 3, **characterized in that** a constant value of the dew point is maintained in the cabin (4) by regulating the secondary hot air flow introduced into the boiler (6).

5. Humidification method according to one of the preceding claims, **characterized in that** the boiler (6) is initially filled with a predetermined volume of water, and **in that** periodic fillings of the said boiler are ordered when the volume of water inside the latter reaches a predetermined minimum level.

6. Humidification method according to one of the preceding claims, **characterized in that** emptying of the boiler (6) is ordered when the aircraft descends below a predetermined altitude.

7. Humidification method according to one of the preceding claims, **characterized in that** the boiler is fed from the drinking water circuit (7) of the aircraft.

8. Humidification device for implementing the method according to one of claims 1 to 7, **characterized in that** it comprises :
- a boiler (6) consisting of a closed principal reservoir enclosing an air/water exchanger (17) and provided at its lower part with a water inlet and a hot air inlet (14), and at its upper part with an outlet manifold (15),
- a secondary conduit (3) for feeding the boiler (6) with hot air connected to a primary hot air circuit coming from a turbo-engine of the aircraft, and provided with a valve.(2) for regulating the flow of hot air delivered to the said boiler,
- a conduit (7) for feeding the boiler (6) with water provided with at least one supply valve (8,9),
- a conduit connecting the outlet manifold (15) of the boiler (6) and the heating/conditioning circuit of the aircraft,
- and a control unit (13) programmed to drive each supply valve (8,9) with a view to ensuring the filling of the boiler (6) with water, and for modulating the position of the regulating valve (2) with a view to regulating the flow of hot air delivered into the said boiler.

9. Humidification device according to claim 8, **characterized in that** :
- it includes a temperature and relative humidity sensor (5) designed to be positioned in the cabin (4) and adapted so as to deliver signals representing the temperature and relative humidity in the said cabin,
- the control unit (13) is programmed so as to calculate, from the signals delivered by the temperature and relative humidity sensor (5), and from a signal representing the pressure in the cabin, the dew point in the said cabin, and so as to adjust the valve (2) for regulating the secondary hot air flow, so as to obtain a dew point with a predetermined value in the cabin.

10. Humidification device according to either of claims 8 or 9, **characterized in that** it includes a level sensor (12). positioned inside the boiler (6) and adapted so as to deliver signals representing the volume of water contained in the said boiler, the control unit (13) being programmed to order the opening of each feed valve (8,9) when a signal is received representing a predetermined minimum volume of water inside the boiler (6), and to order the closure of each feed valve (8,9) when a signal is received representing a predetermined maximum volume of water inside the said boiler.

11. Humidification device according to claim 10, **characterized in that** it comprises two valves, a so called feed valve (9) and isolation valve (8) positioned on the water feed conduit (7), the control unit (13) being adapted so as to order in cascade the opening and closing of the said valves with a view to filling the boiler (6) with water.

12. Humidification device according to either of claims 10 or 11, **characterized in that** the level sensor is a capacitive sensor (12) consisting of a tubular probe adapted so as to extend into a lateral compartment (16) of the boiler (6) communicating with the principal reservoir of the said boiler.

13. Humidification device according to one of claims 8 to 12, **characterized in that** it includes a valve (10) for purging the boiler (6), the control unit (13) being programmed so as to order the opening of the said valve when the aircraft descends below a predetermined altitude.

14. Humidification device according to one of claims 8 to 13, **characterized in that** it includes a temperature sensor (11) positioned at the outlet from the boiler (6) and designed to detect excess heating temperatures.

15. Humidification device according to one of claims 8 to 14, **characterized in that** the air/water exchanger of the boiler (6) is a plate exchanger (17) delimiting conduits (17a) for the passage of hot air provided with internal veins (18) connecting the said plates.
